# FASCICULE DE BREVET EUROPEEN

(11) **EP 1 494 529 B1**
(45) Date de publication et mention de la délivrance du brevet: **03.06.2015**
(21) Numéro de dépôt: 03740577.6
(22) Date de dépôt: 08.04.2003
(51) Int. Cl.: A01N 25/34, A01N 33/12, A01N 25/10, A01N 41/10, A01P 1/00, A01P 3/00

(54) **SUPPORT D'INFORMATION PRESENTANT DES PROPRIETES BIOCIDES ET SON PROCEDE DE FABRICATION**
INFORMATIONSTRÄGER MIT BIOZIDEN EIGENSCHAFTEN UND VERFAHREN ZU SEINER HERSTELLUNG
DATA MEDIUM HAVING BIOCIDAL PROPERTIES AND METHOD FOR MAKING SAME

(30) Priorité: 08.04.2002 FR 0204363
(43) Date de publication de la demande: 12.01.2005
(60) Demande divisionnaire: 11160846.9
(73) Titulaire: ARJOWIGGINS SECURITY, 92100 Boulogne Billancourt (FR)
(72) Inventeur: JAYET-LARAFFE, Christiane, F-38490 La Batie-Divisin (FR); ROSSET, Henri, F-38730 Le Pin (FR)
(74) Mandataire: Tanty, François
(86) Numéro de dépôt international: PCT/FR2003/001097
(87) Numéro de publication internationale: WO 2003/084326

(56) Documents cités:
- EP-A- 0 251 132
- WO-A-00/18577
- WO-A-00/49219
- WO-A-99/42658
- US-A- 3 738 995
- US-A- 4 929 498
- US-A- 4 950 685
- US-A- 5 786 282
- US-B1- 6 197 805
- US-B1- 6 262 097
- PATENT ABSTRACTS OF JAPAN vol. 1997, no. 07, 31 juillet 1997 (1997-07-31) & JP 09 067797 A (DAIWA KAGAKU KOGYO KK), 11 mars 1997 (1997-03-11)
- PATENT ABSTRACTS OF JAPAN vol. 017, no. 216 (C-1053), 28 avril 1993 (1993-04-28) & JP 04 356404 A (SOMAR CORP), 10 décembre 1992 (1992-12-10)
- PATENT ABSTRACTS OF JAPAN vol. 017, no. 513 (C-1111), 16 septembre 1993 (1993-09-16) & JP 05 139918 A (NIKKA CHEM CO LTD), 8 juin 1993 (1993-06-08)
- PATENT ABSTRACTS OF JAPAN vol. 1999, no. 08, 30 juin 1999 (1999-06-30) & JP 11 071211 A (TAKEDA CHEM IND LTD), 16 mars 1999 (1999-03-16)
- DATABASE WPI Section Ch, Week 199728 Derwent Publications Ltd., London, GB; Class A82, AN 1997-306854 XP002255632 & JP 09 119096 A (DAIWA KAGAKU KOGYO KK), 6 mai 1997 (1997-05-06)

## Description

L'invention concerne un support d'information destiné à être manipulé relativement fréquemment, en particulier un billet de banque.

De manière plus spécifique, l'invention concerne un support d'information présentant des propriétés biocides et son procédé de fabrication.

Dans les sociétés modernes, une quantité de plus en plus importante de supports destinés à transmettre des informations est manipulée quotidiennement et fréquemment par un grand nombre de personnes, pour lesquelles aucun contrôle sanitaire n'est exigé.

Or, ces personnes, dû fait de leur environnement, de leur activité professionnelle, de leur entourage ou de leur hygiène de vie, peuvent être porteuses de germes, de microbes et d'agents de contamination en général, générateurs de maladies épidémiques et pandémiques plus ou moins graves.

Ainsi, le support d'information manipulé par ces personnes est, à son tour, susceptible de contenir de tels microorganismes pathogènes.

Il devient alors un important véhicule de dissémination de bactéries, levures et champignons et peut potentiellement provoquer des infections chez ceux qui le manipulent.

En outre, récemment, la possibilité d'une action terroriste par contamination bactériologique de tels supports d'information n'étant plus à négliger, le risque lié à la manipulation de tels supports d'information devient particulièrement sensible.

En tant que monnaie d'échange lors des transactions commerciales, le billet de banque constitue l'un des supports d'information les plus manipulés au monde et représente, de ce fait, une menace potentielle pour notre santé.

Dans de nombreux pays, les billets sont manipulés des milliards de fois pendant leur durée de circulation.

Ils se chargent alors de microorganismes provenant à la fois du milieu ambiant et de l'organisme humain.

Une étude menée par l'Institut de Recherches biochimiques Gazaga da Gama Filho au Brésil sur la contamination microbienne des billets de banque brésiliens et présentée le 28 septembre 2001 a révélé notamment la présence de deux agents contaminants particuliers, le Staphylococcus sp et l'Escherichia Coli.

La présence de ces deux microorganismes peut entraîner pour celui qui manipule le billet de banque diverses infections, qui vont des maladies superficielles, telles que les piodermites, jusqu'aux orgelets, otites, sinusites, pharygintes et autres affections plus graves en fonction des lieux de pénétration, des quantités, de la virulence de l'échantillon, et de la résistance individuelle.

Dans ce contexte, la tendance qui se fait jour d'un allongement de la durée de vie du billet de banque ne peut qu'aggraver, pour le futur, le risque de contamination lié à la manipulation de ces billets.

Le problème de la contamination des supports d'information en général, et des billets de banque en particulier, bien que n'étant pas réellement nouveau, n'a pourtant pas jusqu'à présent, à la connaissance de la Demanderesse, fait l'objet de recherches exhaustives suffisantes.

L'étude précédemment citée mentionne tout d'abord la possibilité d'utiliser un matériau plastique en lieu et place du matériau fibreux cellulosique traditionnel pour la fabrication desdits billets de banque.

Le matériau fibreux cellulosique ayant une tendance à absorber l'humidité favoriserait le développement des microorganismes en son sein.

Or, l'étude montre que ce changement réduit mais n'écarte pas le risque de contamination.

D'autres solutions techniques ont été divulguées récemment dans l'art antérieur et consistent en fait à traiter le papier billet de banque avec un agent antimicrobien.

La demande de brevet WO 95/42658 envisage en particulier l'ajout d'un agent antimicrobien substantif à base de biguanide.

La demande de brevet JP 09-067797 propose de traiter le papier avec des agents tels que le didecyldimethyl ammonium chloride, ou le diiodo-P-trimethyl sulfone.Or, la demanderesse a constaté que ces solutions antérieures soit ne répondent pas complètement au problème posé, l'agent antimicrobien n'ayant pas une action biocide totale, c'est-à-dire à la fois antifongique et antibactériologique, soit répondent au problème posé au prix d'une addition importante d'agent antimicrobien.

Ces solutions antérieures s'avèrent donc inefficaces et trop chères.

De plus, les agents antimicrobiens se caractérisent en général par un degré de toxicité ; leur ajout à forte dose peut donc s'avérer inadapté, voire dangereux.

Il a été décrit dans le brevet US 4,950,685 une combinaison d'agents biocides destinée à prévenir l'apparition de moisissures sur le bois.

L'invention vise donc à fournir un support d'information présentant des propriétés à la fois antifongiques et antibactériologiques, et ne présentant pas les inconvénients de l'art antérieur.

La Demanderesse, après avoir testé de nombreuses compositions biocides, est parvenue, de façon surprenante, à résoudre les problèmes posés en traitant le support d'information à l'aide d'un mélange de deux agents biocides, l'un ayant une action fongistatique et/ou fongicide, l'autre ayant une action bactériostatique et/ou bactéricide.

Il s'est avéré aussi que parmi les agents antiseptiques testés, certains pouvaient présenter les deux actions en même temps.

Ainsi, l'invention fournit un support d'information destiné à être manipulé relativement fréquemment, caractérisé en ce qu'il est destiné à la fabrication d'un billet de banque, d'un passeport, d'une carte à jouer, d'une carte à puce, d'un emballage, d'un livre ou d'un magazine et qu'il contient au moins du chlorure de didécyl diméthyl ammonium à titre d'agent bactériostatique et/ou bactéricide et du p-[(Diiodométhyl) sulfonyl] toluol sous forme de dispersion aqueuse à titre d'agent fongistatique et/ou fongicide.

Le support peut également contenir un agent bactériostatique et/ou bactéricide choisi parmi les composés à base de chitosan ou dérivés de chitine, d'ammonium quaternaire, de zéolithe de zinc, d'ions argent et de triclosan.

Le support peut également contenir un agent fongistatique et/ou fongicide à base de d'iodopropynyl butylcarbamate ou de méthyl-1H-benzimidazol-2-ylcarbamate sous forme de dispersion aqueuse.

De préférence, la quantité en poids sec d'agents biocides dans le support est inférieure à 1 %, et de préférence inférieure à 0,2 %.

De préférence, après une heure de contact dynamique du support avec une souche d'Eschérichia Coli ou de Staphylococcus Aureus, le pourcentage de réduction de l'activité des souches correspondantes est supérieur à 99,9 %, dans les conditions définies par la méthode ASTM E 2149-01.

De préférence aussi, après 24 heures de contact dynamique du support avec une souche d'Eschérichia Coli ou de Staphylococcus Aureus, l'activité antibactérienne définie par la méthode XPG 39010 est négative.

Le support d'information est formé à base de matériaux cellulosiques, notamment du papier.

De préférence, le support d'information est destiné à la fabrication d'un billet de banque ou d'un passeport.

Un autre objet de l'invention concerne un procédé de fabrication du support d'information précédemment cité, caractérisé en ce que lesdits agents biocides sont incorporés à un support de base formé de matériaux cellulosiques.

L'incorporation desdits agents biocides dans le support de base peut se faire de diverses manières :
- par immersion dudit support de base dans une solution dudit agent biocide,
- par pulvérisation dudit support de base avec une solution dudit agent biocide,
- par impression dudit support de base à l'aide d'une encre contenant lesdits agents biocides,
- par surfaçage dudit support de base avec une solution contenant lesdits agents biocides et un agent de surfaçage aqueux, l'agent de surfaçage aqueux incorporant de préférence de la glycérine comme plastifiant,
- par couchage dudit support de base avec une solution de couchage contenant lesdits agents biocides,
- par dépôt sur ledit support de base d'un vernis de surimpression contenant lesdits agents biocides,
- par enduction de microcapsules ou de cyclodextrine contenant lesdits agents biocides sur ledit support de base.

Les exemples non limitatifs suivants, permettront de mieux comprendre comment l'invention peut être mise en pratique et ses avantages.

### EXEMPLE 1 comparatif :

On forme une feuille de papier sur une machine à papier dite de forme ronde avec une toile comportant un motif permettant de faire un filigrane, ce papier pouvant convenir comme papier pour fabriquer un billet de banque, de la façon suivante :
- on met en suspension dans de l'eau une pâte de fibres de coton, on raffine cette suspension à 60° SCHOEPPER-RIEGLER,
- on ajoute un agent de résistance humide, environ 2,5% en poids sec d'une résine poly(amide-amine-epychlorhydrine), exprimés par rapport aux fibres de coton,
- on introduit également dans cette suspension des planchettes iridescentes,
- on introduit lors de la formation de la feuille, un fil de sécurité microimprimé dit "window thread", selon les techniques antérieures connues de manière à faire apparaître ce fil dans certaines fenêtres à la surface du papier. Une méthode utilisable pour introduire ce fil est décrite par exemple dans le brevet EP59056.
- après avoir formé la feuille, on la traite en surface en presse encolleuse par un agent de collage.
- on sèche la feuille vers 100°C.

### EXEMPLE 2 comparatif :

On reprend un support selon l'exemple 1 que l'on imprègne dans un bac d'imprégnation contenant une composition réalisée en milieu aqueux qui comporte :
- 98 parts en poids commercial d'un liant PVA,
- 2 parts en poids commercial d'un agent biocide à base d'isothiazolin commercialisé sous la référence « MICROBIOCIDE B43F » par la société INTACE.

La concentration d'agent biocide par rapport au bain total est réglée à 0,05 %.

Le pH de la composition d'imprégnation est fixé à 6,6.

Une fois imprégné, le papier comporte un taux en poids commercial de produit biocide de 0,037 %, ce qui correspond à un taux en poids sec de produit biocide dans le papier d'environ 0,02 %.

### EXEMPLE 3 comparatif :

On reprend un support selon l'exemple 1 que l'on imprègne dans un bac d'imprégnation contenant une composition réalisée en milieu aqueux qui comporte :
- 94 parts en poids commercial d'un liant PVA,
- 6 parts en poids commercial d'un agent biocide à base d'isothiazolin commercialisé sous la référence « MICROBIOCIDE B43F » par la société INTACE.

La concentration d'agent biocide par rapport au bain total est réglée à 0,2 %.

Le pH de la composition d'imprégnation est fixé à 6,6.

Une fois imprégné, le papier comporte un taux en poids commercial de produit biocide de 0,14 %, ce qui correspond à un taux en poids sec de produit biocide dans le papier d'environ 0,07 %.

### EXEMPLE 4 comparatif :

On reprend un support selon l'exemple 1 que l'on imprègne dans un bac d'imprégnation contenant une composition réalisée en milieu aqueux qui comporte :
- 75 parts en poids commercial d'un liant PVA,
- 25 parts en poids commercial d'un agent biocide à base de chitosan commercialisé sous la référence « CHITOGEL » par la société FRANCE CHITINE.

La concentration d'agent biocide par rapport au bain total est réglée à 1,0 %.

Le pH de la composition d'imprégnation est fixé à 6,8.

Une fois imprégné, le papier comporte un taux en poids commercial de produit biocide de 0,75 %, ce qui correspond à un taux en poids sec de produit biocide dans le papier d'environ 0,4 %.

### EXEMPLE 5 comparatif :

On reprend un support selon l'exemple 1 que l'on imprègne dans un bac d'imprégnation contenant une composition réalisée en milieu aqueux qui comporte :
- 70 parts en poids commercial d'un liant PVA,
- 30 parts en poids commercial d'un agent biocide à base de chitosan commercialisé sous la référence « CHITOSAN 241 » par la société FRANCE CHITINE.

La concentration d'agent biocide par rapport au bain total est réglée à 1,25 %.

Le pH de la composition d'imprégnation est fixé à 5,2.

Une fois imprégné, le papier comporte un taux en poids commercial de produit biocide de 0,925 %, ce qui correspond à un taux en poids sec de produit biocide dans le papier d'environ 0,5 %.

### EXEMPLE 6 comparatif :

On reprend un support selon l'exemple 1 que l'on imprègne dans un bac d'imprégnation contenant une composition réalisée en milieu aqueux qui comporte :
- 94 parts en poids commercial d'un liant PVA,
- 6 parts en poids commercial d'un agent biocide à base de chlorure de didécyl diméthyl ammonium commercialisé sous la référence « MICROBIOCIDE B74 » par la société INTACE.

La concentration d'agent biocide B74 par rapport au bain total est réglée à 0,2 %. Le pH de la composition d'imprégnation est fixé à 6,4.

Une fois imprégné, le papier comporte un taux en poids commercial de produit biocide de 0,142 %, ce qui correspond à un taux en poids sec de produit biocide dans le papier d'environ 0,07 %.

### EXEMPLE 7 comparatif :

On reprend un support selon l'exemple 1 que l'on imprègne dans un bac d'imprégnation contenant une composition réalisée en milieu aqueux qui comporte :
- 88 parts en poids commercial d'un liant PVA,
- 6 parts en poids commercial d'un agent biocide à base de chlorure de didécyl diméthyl ammonium commercialisé sous la référence « MICROBIOCIDE B74 » par la société INTACE.
- 6 parts en poids commercial d'un agent biocide à base d'isothiazolin commercialisé sous la référence « MICROBIOCIDE B43F » par la société INTACE.

Les concentrations d'agent biocide B74 et B43F par rapport au bain total sont réglées à 0,2 %.

Le pH de la composition d'imprégnation est fixé à 6,07.

Une fois imprégné, le papier comporte un taux en poids commercial de produit biocide de 0,28 %, ce qui correspond à un taux en poids sec de produit biocide dans le papier d'environ 0,14 %.

### EXEMPLE 8 comparatif :

On reprend un support selon l'exemple 1 que l'on imprègne dans un bac d'imprégnation contenant une composition réalisée en milieu aqueux qui comporte :
- 94 parts en poids commercial d'un liant PVA,
- 6 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 0,2 %.

Le pH de la composition d'imprégnation est fixé à 6,08.

Une fois imprégné, le papier comporte un taux en poids commercial de produit biocide de 0,15 %, ce qui correspond à un taux en poids sec de produit biocide dans le papier d'environ 0,08 %.

### EXEMPLE 9 comparatif :

On reprend un support selon l'exemple 1 que l'on imprègne dans un bac d'imprégnation contenant une composition réalisée en milieu aqueux qui comporte :
- 86 parts en poids commercial d'un liant PVA,
- 14 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 0,5 %.

Le pH de la composition d'imprégnation est fixé à 6,08.

Une fois imprégné, le papier comporte un taux en poids commercial de produit biocide de 0,37 %, ce qui correspond à un taux en poids sec de produit biocide dans le papier d'environ 0,19 %.

### EXEMPLE 10 comparatif :

On reprend un support selon l'exemple 1 que l'on imprègne dans un bac d'imprégnation contenant une composition réalisée en milieu aqueux qui comporte :
- 75parts en poids commercial d'un liant PVA,
- 25 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 1,0 %.

Le pH de la composition d'imprégnation est fixé à 6,08.

Une fois imprégné, le papier comporte un taux en poids commercial de produit biocide de 0,73 %, ce qui correspond à un taux en poids sec de produit biocide dans le papier d'environ 0,37 %.

### EXEMPLE 11 comparatif :

On reprend un support selon l'exemple 1 que l'on imprègne dans un bac d'imprégnation contenant une composition réalisée en milieu aqueux qui comporte :
- 50 parts en poids commercial d'un liant PVA,
- 50 parts en poids commercial d'un agent biocide à base de 3-(méthoxysilyl)propyldiméthyloctadecyl ammoniumchloride commercialisé sous la référence «AEM 5772/5 » par la société DEVAN.

La concentration d'agent biocide par rapport au bain total est réglée à 3,0 %.

Le pH de la composition d'imprégnation est fixé à 6,08.

Une fois imprégné, le papier comporte un taux en poids commercial de produit biocide de 2,22 %, ce qui correspond à un taux en poids sec de produit biocide dans le papier d'environ 1,1 %.

### EXEMPLE 12 comparatif :

On reprend un support selon l'exemple 1 que l'on imprègne dans un bac d'imprégnation contenant une composition réalisée en milieu aqueux qui comporte :
- 75 parts en poids commercial d'un liant PVA,
- 25 parts en poids commercial d'un agent biocide à base de phénylphonolate de sodium commercialisé sous la référence « BACTOLYSE 74880 » par la société ONDEO.

La concentration d'agent biocide par rapport au bain total est réglée à 1,0 %.

Le pH de la composition d'imprégnation est fixé à 6,6.

Une fois imprégné, le papier comporte un taux en poids commercial de produit biocide de 0,72 %, ce qui correspond à un taux en poids sec de produit biocide dans le papier d'environ 0,36 %.

### EXEMPLE 13 comparatif :

On reprend un support selon l'exemple 1 que l'on imprègne dans un bac d'imprégnation contenant une composition réalisée en milieu aqueux qui comporte :
- 80 parts en poids commercial d'un liant PVA,
- 20 parts en poids commercial d'un agent biocide à base de dérivé d'isothiazolone commercialisé sous la référence «SURFASEPT 74818 » par la société ONDEO.

La concentration d'agent biocide par rapport au bain total est réglée à 0,7 %.

Le pH de la composition d'imprégnation est fixé à 6,6.

Une fois imprégné, le papier comporte un taux en poids commercial de produit biocide de 0,525 %, ce qui correspond à un taux en poids sec de produit biocide dans le papier d'environ 0,26 %.

### EXEMPLE 14 comparatif :

On reprend un support selon l'exemple 1 que l'on imprègne dans un bac d'imprégnation contenant une composition réalisée en milieu aqueux qui comporte :
- 97 parts en poids commercial d'un liant PVA,
- 3 parts en poids commercial d'un agent biocide à base de p-[(Diiodométhyl)sulfonyl]toluol commercialisé sous la référence « SURFASEPT 74859 » par la société ONDEO.

La concentration d'agent biocide par rapport au bain total est réglée à 0,1 %.

Le pH de la composition d'imprégnation est fixé à 6,8.

Une fois imprégné, le papier comporte un taux en poids commercial de produit biocide de 0,075 %, ce qui correspond à un taux en poids sec de produit biocide dans le papier d'environ 0,04 %.

### EXEMPLE 15 comparatif :

On reprend un support selon l'exemple 1 que l'on imprègne dans un bac d'imprégnation contenant une composition réalisée en milieu aqueux qui comporte :
- 12,2 parts en poids commercial d'un liant PVA,
- 86,7 parts en poids commercial d'un liant Polyuréthane,
- 0,1 part en poids commercial d'un agent biocide à base de chlorure de didécyl diméthyl ammonium commercialisé sous la référence « MICROBIOCIDE B74 » par la société INTACE,
- 1,0 part en poids commercial d'un agent biocide à base d'iodopropynyl butylcarbamate commercialisé sous la référence « FUNGITROL 420 » par la société ISP.

Les concentrations d'agent biocide B74 et FUNGITROL 420 par rapport au bain total sont réglées respectivement à 0,05 % et 0,5 %.

Une fois imprégné, le papier comporte un taux en poids commercial de produit biocide respectivement de 0,04 % et de 0,4 %, ce qui correspond à un taux en poids sec de produit biocide dans le papier respectivement d'environ 0,02 % et d'environ 0,08 %.

### EXEMPLE 16 comparatif :

On reprend un support selon l'exemple 1 que l'on enduit en surface à l'aide d'une presse encolleuse d'une composition réalisée en milieu aqueux qui comporte :
- 12,3 parts en poids commercial d'un liant PVA,
- 87.0 parts en poids commercial d'un liant Polyuréthane,
- 0,1 part en poids commercial d'un agent biocide à base de chlorure de didécyl diméthyl ammonium commercialisé sous la référence « MICROBIOCIDE B74 » par la société INTACE.
- 0,7 part en poids commercial d'un agent biocide à base d'iodopropynyl butylcarbamate commercialisé sous la référence « FUNGITROL 420 » par la société ISP.

Les concentrations d'agent biocide B74 et FUNGITROL 420 par rapport à la sauce d'enduction totale sont réglées respectivement à 0,05 % et 0,5 %.

Une fois enduit, le papier comporte un taux en poids commercial de produit biocide respectivement de 0,04 % et de 0,27 %, ce qui correspond à un taux en poids sec de produit biocide dans le papier respectivement d'environ 0,02 % et d'environ 0,05 %.

### EXEMPLE 17 selon l'invention :

On reprend un support selon l'exemple 1 que l'on imprègne dans un bac d'imprégnation contenant une composition réalisée en milieu aqueux qui comporte :
- 98,4 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,
- 0,8 part en poids commercial d'un agent biocide à base de p-[(Diiodométhyl)sulfonyl]toluol commercialisé sous la référence « SURFASEPT 74859 » par la société ONDEO.

Les concentrations d'agent biocide B74 et SURFASEPT 74859 par rapport au bain total sont réglées respectivement à 0,05 % et 0,05 %.

Une fois imprégné, le papier comporte un taux en poids commercial de produit biocide respectivement de 0,04 % et de 0,04 %, ce qui correspond à un taux en poids sec de produit biocide dans le papier respectivement d'environ 0,02 % et d'environ 0,02 %.

### EXEMPLE 18 selon l'invention :

On reprend un support selon l'exemple 1 que l'on enduit en surface à l'aide d'une presse encolleuse d'une composition réalisée en milieu aqueux qui comporte :
- 98,4 parts en poids commercial d'un liant PVA,
- 0,8 part en poids commercial d'un agent biocide à base de chlorure de didécyl diméthyl ammonium commercialisé sous la référence « MICROBICIDE B74 » par la société INTACE,
- 0,8 part en poids commercial d'un agent biocide à base de p-[(Diiodométhyl)sulfonyl]toluol commercialisé sous la référence « SURFASEPT 74859 » par la société ONDEO.

Les concentrations d'agent biocide B74 et SURFASEPT par rapport à la sauce d'enduction totale sont réglées respectivement à 0,05 % et 0,05 %.

Une fois enduit, le papier comporte un taux en poids commercial de produit biocide respectivement de 0,04 % et de 0,04 %, ce qui correspond à un taux en poids sec de produit biocide dans le papier respectivement d'environ 0,02 % et d'environ 0,015 %.

### EXEMPLE 19 comparatif :

On reprend un support selon l'exemple 1 que l'on imprègne dans un bac d'imprégnation contenant une composition réalisée en milieu aqueux qui comporte :
- 95,9 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,
- 3,3 parts en poids commercial d'un agent biocide à base de méthyl-1H-benzimidazol-2-ylcarbamate commercialisé sous la référence « SURFASEPT 74843 P » par la société AQUAZUR P&P.

Les concentrations d'agent biocide B74 et SURFASEPT 74843 P par rapport au bain total sont réglées respectivement à 0,05 % et 0,2 %.

Une fois imprégné, le papier comporte un taux en poids commercial de produit biocide respectivement de 0,04 % et de 0,15 %, ce qui correspond à un taux en poids sec de produit biocide dans le papier respectivement d'environ 0,02 % et d'environ 0,07 %.

### EXEMPLE 20 comparatif :

On reprend un support selon l'exemple 1 que l'on enduit en surface à l'aide d'une presse encolleuse d'une composition réalisée en milieu aqueux qui comporte :
- 96,1 parts en poids commercial d'un liant PVA,
- 0,8 part en poids commercial d'un agent biocide à base de chlorure de didécyl diméthyl ammonium commercialisé sous la référence « MICROBIOCIDE B74 » par la société INTACE,
- 3,1 parts en poids commercial d'un agent biocide à base de méthyl-1H-benzimidazol-2-ylcarbamate commercialisé sous la référence « SURFASEPT 74843 P » par la société AQUAZUR P&P.

Les concentrations d'agent biocide B74 et SURFASEPT 74843 P par rapport à la sauce d'enduction totale sont réglées respectivement à 0,05 % et 0,2 %.

Une fois enduit, le papier comporte un taux en poids commercial de produit biocide respectivement de 0,04 % et de 0,15 %, ce qui correspond à un taux en poids sec de produit biocide dans le papier respectivement d'environ 0,02 % et d'environ 0,06 %.

### EXEMPLE 21 comparatif :

On reprend un support selon l'exemple 1 que l'on imprègne dans un bac d'imprégnation contenant une composition réalisée en milieu aqueux qui comporte :
- 60,9 parts en poids commercial d'un liant PVA,
- 38,1 parts en poids commercial d'un liant de type gélatine,
- 1,0 part en poids commercial d'un agent biocide à base d'un mélange de 1,2-benzoisotiazoline-3-one et de méthyl-1-(butylcarbomyl)-2-benzimidazolcarbamate commercialisé sous la référence « FBP-416 » par la société IPEL.

La concentration d'agent biocide par rapport au bain total est réglée à 1 %.

Une fois imprégné, le papier comporte un taux en poids commercial de produit biocide de 0,07 %, ce qui correspond à un taux en poids sec de produit biocide dans le papier d'environ 0,04 %.

### TESTS ET RESULTATS :

On teste la résistance des supports au développement de champignons et de bactéries : ce qui correspond à un test à la fois fongistatique et bactériostatique.

Le test fongistatique, propre à la Demanderesse, utilise la méthode présentée en annexe.

Celle-ci s'inspire à la fois de la norme ASTM G21-90 et de la norme AFNOR NF X 41517.

Le test bactériostatique a consisté à évaluer la résistance des supports traités antibactérien à la croissance de microbes sous des conditions de contact dynamique. La méthode utilisée pour les exemples 1 à 14 est celle décrite dans la norme ASTM E 2149-01.

Elle consiste à mettre en contact le support traité dans une suspension bactérienne comprenant la souche à étudier sous agitation pendant respectivement une heure et 24 heures.

L'activité antibactérienne est définie par la détermination, dans la suspension bactérienne, du nombre d'unités formatrices de colonie avant et après le test.

On en déduit une perte d'activité microbienne, que l'on exprime en pourcentage.

La méthode utilisée pour les exemples 15 à 21 est celle décrite dans la norme XPG 39010.

Elle consiste à mettre en contact le support traité dans une suspension bactérienne comprenant la souche à étudier sous agitation pendant respectivement 0 heure et 24 heures.

L'activité antibactérienne est définie par la détermination, dans la suspension bactérienne, du nombre d'unités formatrices de colonie avant et après le test.

On en déduit une activité antibactérienne A, définie par la formule suivante :
A= moyenne des log(E24i) - moyenne des log(E0i),

Où E24i correspond au nombre d'UFC présentes sur l'éprouvette i à 24 h et E0i correspond au nombre d'UFC présentes sur l'éprouvette i juste après sa mise en contact avec l'agent antibactérien.

Dans les exemples 1 à 14, la souche étudiée a été l'Eschérichia Coli.

Dans les exemples 15 à 21, la souche étudiée a été le Staphylococcus aureus.

Les résultats à ces deux séries de tests ont été rassemblés dans le tableau 1, pour les exemples 1 à 14, et dans le tableau 2, pour les exemples 15 à 21.

Certains exemples, pour lesquels l'activité antibactérienne était plutôt faible, n'ont pas fait l'objet de tests bactériostatiques.

On constate que, pour la série des exemples 1 à 14, les exemples 6 et 7 sont particulièrement adaptés pour lutter contre la croissance des souches Eschérichia Coli.

Comparativement aux exemples 8 à 11, utilisant un autre agent biocide à base d'ammonium quaternaire, ils agissent rapidement et efficacement à des concentrations très faibles.

En ce qui concerne l'activité fongistatique, seuls les exemples 13 et 14 assurent une absence totale de développement de champignons.

Ils sont par contre inefficaces contre le développement bactérien.

Une addition conjuguée de l'agent biocide de l'exemple 6 et de l'exemple 14 est donc particulièrement recommandée pour aboutir à une protection biocide totale pour ledit support d'information.

En ce qui concerne la série des exemples 15 à 21, on constate que tous les agents biocides utilisés ont une action bactéricide assez poussée, étant donné que la totalité des UFC présentes sur les échantillons de papier a disparu 24 heures après sa mise en contact avec lesdits agents.

Leur pouvoir fongistatique est également important, à l'exception de l'exemple 21, pour lequel la Demanderesse a constaté de meilleurs résultats à des concentrations plus élevées.

Notamment, en partir d'un taux d'agent microbiocide

En particulier, le support de base pourra être un papier de sécurité haute durabilité objet de la demande de brevet FR 2 814 476, un papier impression/écriture, un calque ou un billet plastique.

**TABLEAU 1**

| EXEMPLE N° | TEST FONGISTATIQUE SUR MILIEU INERTE | | | | TEST BACTERIOSTATIQUE | |
|---|---|---|---|---|---|---|
| | 7 JOURS | | 14 JOURS | | pourcentage de réduction de l'activité de l'Eschérichia Coli (en %) | |
| | Recto | Verso | Recto | Verso | après 1 h | après 24 h |
| 1 | 4 | 4 | 4 | 4 | 0 | 0 |
| 2 | 4 | 4 | 4 | 4 | | |
| 3 | 2 | 3 | 4 | 4 | | |
| 4 | 4 | 4 | 4 | 4 | 80,6 | >99,9 |
| 5 | 4 | 4 | 4 | 4 | 80,6 | >99,9 |
| 6 | 1 | 1 | 3 | 3 | >99,9 | >99,9 |
| 7 | 1 | 1 | 3 | 2 | >99,9 | >99,9 |
| 8 | 4 | 4 | 4 | 4 | 87,4 | >99,9 |
| 9 | 4 | 4 | 4 | 4 | 92,7 | >99,9 |
| 10 | 4 | 4 | 4 | 4 | 99,5 | >99,9 |
| 11 | 4 | 4 | 4 | 4 | >99,9 | >99,9 |
| 12 | 1 | 1 | 3 | 4 | | |
| 13 | 0 | 0 | 1 | 3 | | |
| 14 | 0 | 0 | 0 | 0 | | |

**TABLEAU 2**

| EXEMPLE N° | TEST FONGISTATIQUE SUR MILIEU INERTE | | | | TEST BACTERIOSTATIQUE | | | | |
|---|---|---|---|---|---|---|---|---|---|
| | 7 JOURS | | 14 JOURS | | Après 0 heure | | Après 24 heures | | Activité antibactérienne A |
| | Recto | Verso | Recto | Verso | E0i | Log(E0i) | E24i | Log(E24i) | |
| 15 | 0 | 0 | 0 | 1 | 34100 | 4,53 | 0 | 0 | - 4,53 |
| 16 | 0 | 0 | 1 | 0 | 7200 | 3,86 | 0 | 0 | - 3,86 |
| 17 | 0 | 0 | 0 | 0 | 6300 | 3,80 | 0 | 0 | - 3,80 |
| 18 | 1 | 1 | 3 | 3 | 189000 | 5,28 | 0 | 0 | - 5,28 |
| 19 | 0 | 0 | 0 | 0 | 89000 | 4,95 | 0 | 0 | - 4,95 |
| 20 | 0 | 0 | 1 | 1 | 49500 | 4,69 | 0 | 0 | - 4,69 |
| 21 | 2 | 2 | 2 | 3 | 100000 | 5 | 0 | 0 | - 5 |

### TEST FONGISTATIQUE

**Principe :** le papier à tester est déposé sur une boîte de Pétri stérile, sur un milieu inerte, apportant de l'humidité à l'intérieur de la boîte, puis ensemencé avec un inoculum préparé avec un mélange de souches activées.

Les boîtes sont placées 14 jours à l'incubateur à 28 ° C, avec observation à 14 jours.

### I - LES SOUCHES UTILISEES :

10 souches différentes sont utilisées :
1) Chaetomium globosum
2) Myrothecium verrucaria
3) Stachybotrys atra
4) Cladosporium herbarum
5) Penicillium funicolosum
6) Trichoderma viride
7) Aspergillus niger
8) Aspergillus flavus
9) Aspergillus ustus
10) Paecilomyces variotii

### II - CONSERVATION DES SOUCHES :

Les souches sont conservées au réfrigérateur entre 3 et 5 °C.

### III - ESSAI :

### A) Activation des souches

Lorsqu'un essai est programmé, la première opération consiste en l'activation des souches, deux semaines (entre 14 et 16 jours) avant le test. En effet, les souches étant conservées sur un milieu peu nutritif, il est nécessaire de les rendre plus actives, en les cultivant sur un milieu plus nutritif.

Suivant les souches, on utilise deux milieux :
Pour le Chaetomium globosum, le Stachybotrys atra, le Cladosporium herbarum et le Penicilium funicolosum, on utilise le milieu suivant :

| | |
|---|---|
| Flocons d'avoine | 50 g |
| Gélose en branche | 20 g |
| Eau distillée | 1000 ml |

Pour les autres souches, on utilise le milieu suivant :

| | |
|---|---|
| Maltéa Moser | 40 g |
| Peptone mycologique | 0,5 g |
| Gélose en branche | 20 g |
| Eau distillée | 1000 ml |

Au bout de 14 jours, les souches sont prêtes pour être utilisées.

### B) Milieux d'essai :

le milieu se compose de :

| | |
|---|---|
| NH₄NO₃ | 3 g |
| KCl | 0,25 g |
| MgSO₄ 7H₂O | 0,5 g |
| KH₂PO₄ | 1 g |
| Agar | 20 g |
| Eau | 1000 ml |

Le pH est ajusté à 5,5 environ.

C'est un milieu inerte servant de support aux éprouvettes.

On stérilise 30 minutes à la cocotte minute le milieu, dans des erlens cotonnés, puis on coule la gélose dans des boîtes en polystyrène stérile.

En parallèle, on stérilise un erlen vide recouvert d'une gaze, puis d'un bouchon de coton et un erlen contenant 100 ml d'eau distillée.

### C) Mise en route du test

On découpe deux éprouvettes/faces minimum, soit quatre boîtes/essai.

On les place dans une pochette plastique séparément jusqu'à la mise en boîte.

Les éprouvettes sont des disques de 33 mm de diamètre, découpées à l'emporte-pièce.

On dépose les éprouvettes au centre de la boîte sur la gélose, à l'aide d'une pince dans les règles d'aseptie.

On étiquette les boîtes.

Préparation de l'inoculum :
On mélange les souches.

La concentration de chaque souche doit être d'environ 10⁶ (10⁵ à 10⁷), mesurée avec la cellule de Thoma, ce qui représente 1 à 10 conidies par carré.

Après la vérification de la concentration, on mélange les souches dans l'erlen vide stérile, puis dans le pulvérisateur au préalable stérilisé à l'alcool.

### D) Ensemencement

A l'aide du pulvérisateur, on ensemence la surface totale, c'est-à-dire éprouvette + gélose.

### E) Incubation

On laisse agir pendant 14 jours à 28 °C avec saturation d'eau.

### IV - RESULTATS

On caractérise l'envahissement du papier par un système de notation :
0 => pas d'attaque
1 => trace de développement fongique
2 => léger développement (10 à 30 %)
3 => développement moyen (30 à 60 %)
4 => fort développement (> 60 %)

## Revendications

1. Support d'information à base de matériaux cellulosiques destiné à être manipulé relativement fréquemment, **caractérisé en ce qu'**il est destiné à la fabrication d'un billet de banque, d'un passeport, d'une carte à jouer, d'une carte à puce, d'un emballage, d'un livre ou d'un magazine et qu'il contient au moins du chlorure de didécyl diméthyl ammonium à titre d'agent bactériostatique et/ou bactéricide et du p-[(Diiodométhyl) sulfonyl] toluol sous forme de dispersion aqueuse à titre d'agent fongistatique et/ou fongicide.

2. Support d'information selon l'une des revendications précédentes, **caractérisé en ce que** la quantité en poids sec d'agents biocides dans le support est inférieure à 1 %, et de préférence inférieure à 0,2 %.

3. Support d'information selon l'une des revendications précédentes, **caractérisé en ce qu'**après une heure de contact dynamique du support avec une souche *d'Escherichia coli* ou de *Staphylococcus aureus,* le pourcentage de réduction de l'activité des souches correspondantes est supérieur à 99,9 %, dans les conditions définies par la méthode ASTM E 2149-01.

4. Support d'information selon l'une des revendications précédentes, **caractérisé en ce qu'**après 24 heures de contact dynamique du support avec une souche d'Eschérichia Coli ou de Staphylococcus Aureus, l'activité antibactérienne définie par la méthode XPG 39010 est négative.

5. Support d'information selon l'une des revendications 1 à 4, **caractérisé en ce qu'**il est en papier.

6. Support d'information selon l'une des revendications 1 à 5, **caractérisé en ce qu'**il s'agit d'un billet de banque.

7. Procédé de fabrication d'un support d'information selon l'une des revendications précédentes, **caractérisé en ce que** lesdits agents biocides sont incorporés à un support de base formé de matériaux cellulosiques.

8. Procédé de fabrication selon la revendication 7, **caractérisé en ce que** l'incorporation desdits agents biocides se fait par immersion dudit support de base dans une solution desdits agents biocides.

9. Procédé de fabrication selon la revendication 7, **caractérisé en ce que** l'incorporation desdits agents biocides se fait par pulvérisation dudit support de base avec une solution desdits agents biocides.

10. Procédé de fabrication selon la revendication 7, **caractérisé en ce que** l'incorporation desdits agents biocides se fait par impression dudit support de base à l'aide d'une encre contenant lesdits agents biocides .

11. Procédé de fabrication selon la revendication 7, **caractérisé en ce que** l'incorporation desdits agents biocides se fait par surfaçage dudit support de base avec une solution contenant lesdits agents biocides et un agent de surfaçage aqueux, l'agent de surfaçage aqueux incorporant de préférence de la glycérine comme plastifiant.

12. Procédé de fabrication selon la revendication 7, **caractérisé en ce que** l'incorporation desdits agents biocides se fait par couchage dudit support de base avec une solution de couchage contenant lesdits agents biocides .

13. Procédé de fabrication selon la revendication 7, **caractérisé en ce que** l'incorporation desdits agents biocides se fait par dépôt sur ledit support de base d'un vernis de surimpression contenant lesdits agents biocides .

14. Procédé de fabrication selon la revendication 7, **caractérisé en ce que** l'incorporation desdits agents biocides se fait par enduction de microcapsules ou de cyclodextrine contenant lesdits agents biocides sur ledit support de base.

## Patentansprüche

1. Informationsträger auf der Basis von Cellulosematerialien, dazu ausgelegt relativ häufig manipuliert zu werden, **gekennzeichnet dadurch, dass** er zur Herstellung einer Banknote, eines Passes, einer Spielkarte, einer Chipkarte, einer Verpackung, eines Buches oder eines Magazins ausgelegt ist und dass er zumindest Didecyldimethylammoniumchlorid als bakteriostatischen und/oder bakteriziden Wirkstoff und p-((Diiodomethyl)sulfonyl)toluol in der Form einer wässrigen Dispersion als fungistatischen und/oder fungiziden Wirkstoff enthält.

2. Informationsträger nach einem der vorhergehenden Ansprüche, **gekennzeichnet dadurch, dass** die Menge im Trockengewicht der bioziden Wirkstoffe im Träger unterhalb von 1% und vorzugsweise unterhalb von 0,2% liegt.

3. Informationsträger nach einem der vorhergehenden Ansprüche, **gekennzeichnet dadurch, dass** nach einer Stunde des dynamischen Kontakts des Trägers mit einem Stamm von *Escherichia coli* oder von *Staphylococcus aureus* die prozentuale Verringerung der Aktivität der entsprechenden Stämme oberhalb von 99,9% gemäß den durch das Verfahren ASTM E 2149-01 definierten Bedingungen liegt.

4. Informationsträger nach einem der vorhergehenden Ansprüche, **gekennzeichnet dadurch, dass** nach 24 Stunden des dynamischen Kontakts des Trägers mit einem Stamm von *Escherichia coli* oder von *Staphylococcus aureus* die durch das Verfahren XPG 39010 definierte antibakterielle Aktivität negativ ist.

5. Informationsträger nach einem der Ansprüche 1 bis 4, **gekennzeichnet dadurch, dass** er aus Papier ist.

6. Informationsträger nach einem der Ansprüche 1 bis 5, **gekennzeichnet dadurch, dass** es sich bei ihm um eine Banknote handelt.

7. Herstellungsverfahren eines Informationsträgers nach einem der vorhergehenden Ansprüche, **gekennzeichnet dadurch, dass** die bioziden Wirkstoffe in einen aus Cellulosematerialien gebildeten Basisträger eingebracht sind.

8. Herstellungsverfahren nach Anspruch 7, **gekennzeichnet dadurch, dass** das Einbringen der bioziden Wirkstoffe durch Immersion des Basisträgers in eine Lösung der bioziden Wirkstoffe geschieht.

9. Herstellungsverfahren nach Anspruch 7, **gekennzeichnet dadurch, dass** das Einbringen der bioziden Wirkstoffe durch Bestäuben des Basisträgers mit einer Lösung der bioziden Wirkstoffe geschieht.

10. Herstellungsverfahren nach Anspruch 7, **gekennzeichnet dadurch, dass** das Einbringen der bioziden Wirkstoffe durch Bedrucken des Basisträgers mithilfe einer Tinte, die die bioziden Wirkstoffe enthält, geschieht.

11. Herstellungsverfahren nach Anspruch 7, **gekennzeichnet dadurch, dass** das Einbringen der bioziden Wirkstoffe durch Oberflächenbehandlung des Basisträgers mit einer Lösung, die die bioziden Wirkstoffe enthält, und einem wässrigen Oberflächenbehandlungswirkstoff geschieht, wobei der wässrige Oberflächenbehandlungswirkstoff vorzugsweise Glycerin als Weichmacher beinhaltet.

12. Herstellungsverfahren nach Anspruch 7, **gekennzeichnet dadurch, dass** das Einbringen der bioziden Wirkstoffe durch Beschichtung des Basisträgers mit einer Beschichtungslösung, die die bioziden Wirkstoffe enthält, geschieht.

13. Herstellungsverfahren nach Anspruch 7, **gekennzeichnet dadurch, dass** das Einbringen der bioziden Wirkstoffe durch Aufbringen eines Überdrucklacks, der die bioziden Wirkstoffe enthält, auf dem Basisträger geschieht.

14. Herstellungsverfahren nach Anspruch 7, **gekennzeichnet dadurch, dass** das Einbringen der bioziden Wirkstoffe durch Beschichten des Basisträgers mit Mikrokapseln oder mit Cyclodextrin, die bzw. das die bioziden Wirkstoffe enthält, geschieht.

## Claims

1. Information carrier based on cellulosic materials and intended to be handled relatively frequently, **characterised in that** it is intended for the production of a banknote, a passport, a playing card, a chip card, a packaging, a book or a magazine and **in that** it contains at least didecyldimethylammonium chloride as a bacteriostatic and/or bactericidal agent and p-[(diiodomethyl)sulfonyl] toluene in the form of an aqueous dispersion as a fungistatic and/or fungicidal agent.

2. Information carrier according to one of the preceding claims, **characterised in that** the quantity by dry weight of biocidal agents in the carrier is less than 1% and preferably less than 0.2%.

3. Information carrier according to either of the preceding claims, **characterised in that**, after an hour of the carrier being in dynamic contact with a strain of *Escherichia coli* or of *Staphylococcus aureus,* the percentage of reduction in the activity of the concerned strains is more than 99.9%, under the conditions defined by method ASTM E 2149-01.

4. Information carrier according to one of the preceding claims, **characterised in that**, after 24 hours of the carrier being in dynamic contact with a strain of Escherichia coli or of Staphylococcus aureus, the antibacterial activity as defined by the method XPG 39010 is negative.

5. Information carrier according to one of claims 1 to 4, **characterised in that** it is made of paper.

6. Information carrier according to one of claims 1 to 5, **characterised in that** it is a banknote.

7. Method of producing an information carrier according to one of the preceding claims, **characterised in that** said biocidal agents are incorporated into a basic carrier made from cellulosic materials.

8. Method of production according to claim 7, **characterised in that** the incorporation of said biocidal agents is performed by immersing said basic carrier in a solution of said biocidal agents.

9. Method of production according to claim 7, **characterised in that** the incorporation of said biocidal agents is performed by spraying said basic carrier with a solution of said biocidal agents.

10. Method of production according to claim 7, **characterised in that** the incorporation of said biocidal agents is performed by printing on said basic carrier with an ink containing said biocidal agents.

11. Method of production according to claim 7, **characterised in that** the incorporation of said biocidal agents is performed by surfacing said basic carrier with a solution containing said biocidal agents and an aqueous surfacing agent, the aqueous surfacing agent preferably incorporating glycerin as a plasticiser.

12. Method of production according to claim 7, **characterised in that** the incorporation of said biocidal agents is performed by coating said basic carrier with a coating solution containing said biocidal agents.

13. Method of production according to claim 7, **characterised in that** the incorporation of said biocidal agents is performed by depositing on said basic carrier an overprinting varnish containing said biocidal agents.

14. Method of production according to claim 7, **characterised in that** the incorporation of said biocidal agents is performed by coating microcapsules or cyclodextrin containing said biocidal agents onto said basic carrier.
